# EUROPÄISCHE PATENTSCHRIFT

(11) **EP 2 827 003 B1**
(45) Veröffentlichungstag und Bekanntmachung des Hinweises auf die Patenterteilung: **10.04.2019**
(21) Anmeldenummer: 13176499.5
(22) Anmeldetag: 15.07.2013
(51) Int. Cl.: F04D 29/54, F01D 5/14, F01D 9/04

(54) **Gasturbinen-Verdichter-Leitgitter**
Gas turbine compressor guide vane assembly
Grille de guidage de compresseur à turbines à gaz

(43) Veröffentlichungstag der Anmeldung: 21.01.2015
(73) Patentinhaber: MTU Aero Engines AG, 80995 München (DE)
(72) Erfinder: Elorza Gomez, Sergio, 80997 München (DE)

(56) Entgegenhaltungen:
- DE-T2- 69 721 114
- JP-A- S5 264 008
- US-A1- 2005 031 454
- US-A1- 2007 231 149

## Beschreibung

Die vorliegende Erfindung betrifft ein Leitgitter für einen Verdichter einer Gasturbine, insbesondere eines Flugtriebwerks, gemäß dem Oberbegriff des Anspruchs 1, wie aus der Druckschrift US 2007/23 11 49 A1 bekannt ist.

Ferner ist in der Druckschrift JP S52-64008 A ein axialer Turboverdichter offenbart.

Aus der US 2005/0031454 A1 ist ein Leitgitter mit einer Mehrzahl von Leitschaufeln bekannt, deren Profilschnitte mit einer Rotationsachse einen Staffelungswinkel einschließen, der an Schaufelfuß und -spitze jeweils ein lokales Minimum aufweist und dazwischen auf ein lokales Maximum zunimmt, um die Effizienz des Leitgitters zu verbessern.

Dies kann jedoch zu einer Abflachung der Stufenkennlinie bzw. einer Reduzierung der Verdichterstabilität bzw. des Pumpgrenzabstandes führen.

Eine Aufgabe einer Ausführung der vorliegenden Erfindung ist es, eine verbesserte Gasturbine zur Verfügung zu stellen.

Diese Aufgabe wird durch ein Leitgitter mit den Merkmalen des Anspruchs 1 gelöst. Die Ansprüche 10, 11 stellen einen Verdichter mit einem solchen Leitgitter bzw. eine Gasturbine mit einem solchen Verdichter unter Schutz. Vorteilhafte Ausführungsformen der Erfindung sind Gegenstand der Unteransprüche.

Nach einem Aspekt der vorliegenden Erfindung werden die Profilschnitte, ausgehend von einem mittleren Bereich, zu radial inneren und äußeren Kanalwänden hin aufgestaffelt und in der Nähe der radial inneren und/oder äußeren Kanalwände lokal wieder zugestaffelt. Auf diese Weise kann in einer Ausführung durch die Staffelung im mittleren Bereich ein Reaktionsgrad in diesem Bereich stärker abgesenkt und so der Verdichterwirkungsgrad verbessert werden. Zusätzlich oder alternativ kann durch die lokale Zustaffelung im Bereich einer oder beider Kanalwände die Strömung in diesem Bereich jeweils aerodynamisch verstärkt und so die Verdichterstabilität verbessert, insbesondere ein Pumpgrenzabstand vergrößert werden.

Nach einem Aspekt der vorliegenden Erfindung weist ein Leitgitter für einen Verdichter einer Gasturbine eine Mehrzahl von Leitschaufeln auf, die lösbar oder dauerhaft radial außen mit einem Gehäuse verbunden sein können. Zusätzlich oder alternativ können die Leitschaufeln radial innen mit einer Nabe oder einem Deckband verbunden sein. Gleichermaßen können die Leitschaufeln radial innen umströmte, deckbandlose Schaufelspitzen aufweisen, die einer Nabe oder einem Rotor des Verdichters gegenüberliegen.

Eine Leitschaufel ist aus mehreren Profilschnitten zusammengesetzt bzw. durch diese definiert, die längs einer sogenannten Fädelachse radial übereinander angeordnet sind und gemeinsam eine Druckseite, eine Saugseite, eine Vorder- und eine Hinterkante der Leitschaufel definieren und beispielsweise sogenannte NACA-Profile sein können.

Jeder Profilschnitt schließt mit der Rotationsachse des Verdichters bzw. einer Mittel-bzw. Symmetrieachse des Leitgitters einen Staffelungswinkel ein. Unter einem Staffelungswinkel ("stagger angle") wird vorliegend insbesondere der Winkel verstanden, den eine Profilsehne eines Profilschnittes mit der Achse einschließt. Er kann daher dem Komplementärwinkel zu 90° zu einem Winkel entsprechen, den die Profilsehne mit der Umfangsrichtung bzw. einer Normalebene auf die Rotationsachse des Verdichters bzw. Mittel- bzw. Symmetrieachse des Leitgitters einschließt, und der, abweichend von der vorliegenden Nomenklatur, in der Literatur teilweise ebenfalls Staffelungswinkel genannt wird. Unter einer Profilsehne ("blade chord") wird vorliegend insbesondere eine Verbindungslinie zwischen einer Profilnase bzw. -vorderkante und einer Profilhinterkante verstanden. Gleichermaßen kann eine Profilsehne im Sinne der vorliegenden Erfindung insbesondere auch die Tangente (sogenannte "Profiltangente") an die Druckseite des Profilschnitts sein.

Nach einem Aspekt der vorliegenden Erfindung nimmt der Staffelungswinkel über der Kanalhöhe in radialer Richtung von innen nach außen in einem ersten, radial innersten Abschnitt von einem Anfangswert auf ein inneres lokales Minimum ab, in einem daran anschließenden zweiten Abschnitt auf ein lokales Maximum zu und in einem daran anschließenden dritten Abschnitt auf ein äußeres lokales Minimum ab. Zusätzlich oder alternativ zu der Abnahme des Staffelungswinkels in dem ersten, radial innersten Abschnitt kann der Staffelungswinkel über der Kanalhöhe in radialer Richtung von innen nach außen in einem an den dritten Abschnitt anschließenden vierten, radial äußersten Abschnitt von dem äußeren lokalen Minimum auf einen Endwert zunehmen.

Somit nimmt nach einem Aspekt der vorliegenden Erfindung der Staffelungswinkel über der Kanalhöhe in radialer Richtung von innen nach außen bzw. zwischen einem radial innersten Anfangswert und einem radial äußersten Endwert
- in einem ersten, radial innersten Abschnitt von dem radial innersten Anfangswert auf ein inneres lokales Minimum ab,
- in einem daran anschließenden zweiten Abschnitt auf ein lokales Maximum zu, und
- in einem daran anschließenden dritten Abschnitt auf ein äußeres lokales Minimum ab,
- an den sich ein radial äußerster, vierter Abschnitt anschließen kann.

Das äußere lokale Minimum kann in einer Ausführung am radial äußeren Rand der Kanalhöhe oder auch von diesem radial nach innen beabstandet sein. Entsprechend kann in einer Ausführung der radial äußerste Endwert des Staffelungswinkels dem äußeren lokalen Minimum entsprechen oder größer als dieses sein.

Nach einem weiteren Aspekt der vorliegenden Erfindung nimmt der Staffelungswinkel über der Kanalhöhe in radialer Richtung von innen nach außen bzw. zwischen einem radial innersten Anfangswert und einem radial äußersten Endwert
- in einem an einen ersten, radial innersten Abschnitt anschließenden zweiten Abschnitt auf ein lokales Maximum zu,
- in einem daran anschließenden dritten Abschnitt auf ein äußeres lokales Minimum ab, und
- in einem an den dritten Abschnitt anschließenden vierten, radial äußersten Abschnitt von dem äußeren lokalen Minimum auf einen radial äußersten Endwert zu,
wobei in einer Ausführung ein inneres lokales Minimum am radial inneren Rand der Kanalhöhe oder auch von dieser radial nach außen beabstandet sein kann. Entsprechend kann in einer Ausführung der radial innerste Anfangswert dem inneren lokalen Minimum entsprechen oder größer als dieses sein.

Diese beiden Aspekte können miteinander kombiniert sein. Entsprechend nimmt nach einem Aspekt der vorliegenden Erfindung der Staffelungswinkel über der Kanalhöhe in radialer Richtung von innen nach außen in einem ersten, radial innersten Abschnitt von einem radial innersten Anfangswert auf ein inneres lokales Minimum ab, in einem daran anschließenden zweiten Abschnitt auf ein lokales Maximum zu, in einem daran anschließenden dritten Abschnitt auf ein äußeres lokales Minimum ab, und in einem daran anschließenden vierten, radial äußersten Abschnitt von dem äußeren lokalen Minimum auf einen radial äußersten Endwert zu.Hierdurch ergibt sich in einer Ausführung ein W-artiger Verlauf des Staffelungswinkels über bzw. in Richtung der Kanalhöhe.

Unter einer Kanalhöhe im Sinne der vorliegenden Erfindung wird insbesondere eine radiale Position zwischen einem radial inneren Schaufel(blatt)ende, insbesondere einer Nabe, einer freien Schaufelspitze oder einem Deckband, und einem radial äußeren Schaufel(blatt)ende, insbesondere einer Kanalwand eines Strömungskanals verstanden, in dem das Leitgitter angeordnet ist. Gleichermaßen kann eine Kanalhöhe im Sinne der vorliegenden Erfindung insbesondere eine radiale Position zwischen zwei einander gegenüberliegenden Kanalwänden sein, die zusammen mit den Saug- und Druckseiten des Leitgitters einen Strömungskanal definieren. Der erste, radial innerste Abschnitt beginnt in einer Ausführung an einer radial inneren Kanalwand, insbesondere einem Deckband, einer Nabe oder einer freien Schaufelspitze. Zusätzlich oder alternativ endet der vierte, radial äußerste Abschnitt in einer Ausführung an einer radial äußeren Kanalwand, insbesondere einem Gehäuse des Verdichters. Zusätzlich oder alternativ schließen der erste, zweite, dritte und/oder vierte Abschnitt jeweils unmittelbar aneinander an.

In einer Ausführung nimmt der Staffelungswinkel in dem ersten Abschnitt monoton ab. Hierunter wird vorliegenden insbesondere in fachüblicher Weise verstanden, dass der Staffelungswinkel an einer radial weiter außen gelegenen Position des ersten Abschnitts stets höchstens denselben Betrag aufweist wie an jeder radial weiter innen gelegenen Position des ersten Abschnitts. In einer Weiterbildung nimmt der Staffelungswinkel in dem ersten Abschnitt streng monoton ab. Hierunter wird vorliegenden insbesondere in fachüblicher Weise verstanden, dass der Staffelungswinkel an einer radial weiter außen gelegenen Position des ersten Abschnitts stets einen kleineren Betrag aufweist wie an jeder radial weiter innen gelegenen Position des ersten Abschnitts.

Zusätzlich oder alternativ nimmt der Staffelungswinkel in einer Ausführung in dem dritten Abschnitt monoton, insbesondere streng monoton, ab.

Zusätzlich oder alternativ nimmt der Staffelungswinkel in einer Ausführung in dem zweiten Abschnitt monoton zu. Hierunter wird vorliegenden insbesondere in fachüblicher Weise verstanden, dass der Staffelungswinkel an einer radial weiter außen gelegenen Position des zweiten Abschnitts stets wenigstens denselben Betrag aufweist wie an jeder radial weiter innen gelegenen Position des zweiten Abschnitts. In einer Weiterbildung nimmt der Staffelungswinkel in dem zweiten Abschnitt streng monoton zu. Hierunter wird vorliegenden insbesondere in fachüblicher Weise verstanden, dass der Staffelungswinkel an einer radial weiter außen gelegenen Position des zweiten Abschnitts stets einen größeren Betrag aufweist wie an jeder radial weiter innen gelegenen Position des zweiten Abschnitts.

Zusätzlich oder alternativ nimmt der Staffelungswinkel in einer Ausführung in dem vierten Abschnitt monoton, insbesondere streng monoton, zu.

Insbesondere, wenn die Profilschnitte nur in der Nähe der radial inneren Kanalwand oder nur in der Nähe der radial äußeren Kanalwand lokal wieder zugestaffelt werden, kann der Staffelungswinkel in einer Ausführung auch im ersten Abschnitt monoton, insbesondere streng monoton, zunehmen, d.h. das innere lokale Minimum am radial inneren Rand der Kanalhöhe liegen, oder in einer anderen Ausführung im vierten Abschnitt monoton, insbesondere streng monoton, abnehmen, d.h. das äußere lokale Minimum am radial äußeren Rand der Kanalhöhe liegen. In diesen Fällen können erster und zweiter bzw. dritter und vierter Abschnitt ununterscheidbar ineinander übergehen.

Hierdurch kann jeweils eine aerodynamisch, festigkeits-, schwingungs- und/oder fertigungstechnisch vorteilhafte Gestaltung des Leitgitters erreicht werden.

In einer Ausführung ist das lokale Maximum größer als der Anfangswert, insbesondere um wenigstens 2,5°. Zusätzlich oder alternativ kann das lokale Maximum um höchstens 7° größer sein als der Anfangswert.

Zusätzlich oder alternativ ist das lokale Maximum größer als der Endwert, insbesondere um wenigstens 2,5°. Zusätzlich oder alternativ kann das lokale Maximum um höchstens 7° größer sein als der Endwert. Insbesondere kann also das lokale Maximum ein globales Maximum über der Kanalhöhe sein. Dies ist insbesondere günstig, um den Reaktionsgrad im zweiten und dritten Abschnitt stärker abzusenken und zugleich die Pumpgrenze bzw. Verdichterstabilität zu erhöhen.

In einer Ausführung ist der Anfangswert kleiner als der Endwert, insbesondere um wenigstens 1°. Zusätzlich oder alternativ kann der Anfangswert um höchstens 5°kleiner sein als der Endwert. Es hat sich als günstig herausgestellt, die Profilschnitte radial innen stärker aufzustaffeln.

In einer Ausführung ist der Anfangswert um wenigstens 1° größer als das innere lokale Minimum. Zusätzlich oder alternativ kann der Anfangswert um höchstens 2,5° größer sein als das innere lokale Minimum. Zusätzlich oder alternativ kann der Endwert um wenigstens 1° größer sein als das äußere lokale Minimum. Zusätzlich oder alternativ kann der Endwert um höchstens 2,5° größer sein als das äußere lokale Minimum. Diese lokalen Zustaffelungen haben sich als besonders günstig herausgestellt.

In einer Ausführung ist das lokale Maximum um wenigstens 3,5° größer ist als das innere lokale Minimum. Zusätzlich oder alternativ kann das lokale Maximum um höchstens 9,5° größer sein als das innere lokale Minimum. Zusätzlich oder alternativ kann das lokale Maximum um wenigstens 3,5° größer sein als das äußere lokale Minimum. Zusätzlich oder alternativ kann das lokale Maximum um höchstens 9,5° größer sein als das äußere lokale Minimum. Dies stellt eine vorteilhafte Kombination aus der Reduzierung des Reaktionsgrads im zweiten und dritten Abschnitt und einer Erhöhung der Pumpgrenze bzw. Verdichterstabilität dar.

In einer Ausführung beträgt die Höhe des ersten Abschnitts wenigstens 3% der Gesamtkanalhöhe zwischen dem Anfangs- und dem Endwert. Zusätzlich oder alternativ beträgt in einer Ausführung die Höhe des ersten Abschnitts höchstens 25% der Gesamtkanalhöhe zwischen dem Anfangs- und dem Endwert. Zusätzlich oder alternativ kann die Höhe des vierten Abschnitts wenigstens 3% der Gesamtkanalhöhe zwischen dem Anfangs- und dem Endwert und/oder höchstens 25% der Gesamtkanalhöhe zwischen dem Anfangs- und dem Endwert betragen. Diese Werte reichen aus, um die Pumpgrenze bzw. Verdichterstabilität vorteilhaft zu erhöhen.

In einer Ausführung ist das lokale Maximum zwischen 25% und 75% der Gesamtkanalhöhe zwischen dem Anfangs- und dem Endwert angeordnet. Zusätzlich oder alternativ kann die Höhe des zweiten Abschnitts wenigstens 15% der Gesamtkanalhöhe zwischen dem Anfangs- und dem Endwert und/oder höchstens 55% der Gesamtkanalhöhe zwischen dem Anfangs- und dem Endwert betragen. Zusätzlich oder alternativ kann die Höhe des dritten Abschnitts wenigstens 15% der Gesamtkanalhöhe zwischen dem Anfangs- und dem Endwert und/oder höchstens 55% der Gesamtkanalhöhe zwischen dem Anfangs- und dem Endwert betragen. Diese Werte reichen aus, um den Reaktionsgrad im zweiten bzw. dritten Abschnitt vorteilhaft abzusenken. In einer Ausführung sind die Vorderkanten einer oder mehrerer, insbesondere aller Leitschaufeln zu einer Saugseite der Leitschaufel hin gekrümmt. In einer Weiterbildung sind die Vorderkanten streng konvex zur Saugseite hin gekrümmt. Hierunter wird insbesondere in fachüblicher Weise verstanden, dass die Krümmung der Vorderkante über der Kanalhöhe stets dasselbe Vorzeichen aufweist, vorzugsweise von radial innen nach radial außen streng monoton zu- oder abnimmt.

Ein erfindungsgemäßes Leitgitter wird besonders vorteilhaft als stromabwärtiges Leitgitter bzw. einer hinteren Verdichterstufe in einem Verdichter für eine Gasturbine verwendet, ein erfindungsgemäßer Verdichter besonders vorteilhaft als Hochdruckverdichter, der einem Nieder- oder Mitteldruckverdichter nachgeschaltet ist bzw. als stromabwärtiger Verdichter für eine Gasturbine. Mit besonderem Vorteil wird das Leitgitter in einer Flugtriebwerk-Gasturbine verwendet.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Profilschnitt einer Leitschaufel eines Leitgitters eines Verdichters einer Gasturbine nach einer Ausführung der vorliegenden Erfindung; und
- Fig. 2: den Verlauf eines Staffelungswinkels der Leitschaufel der Fig. 1 über einer Kanalhöhe.

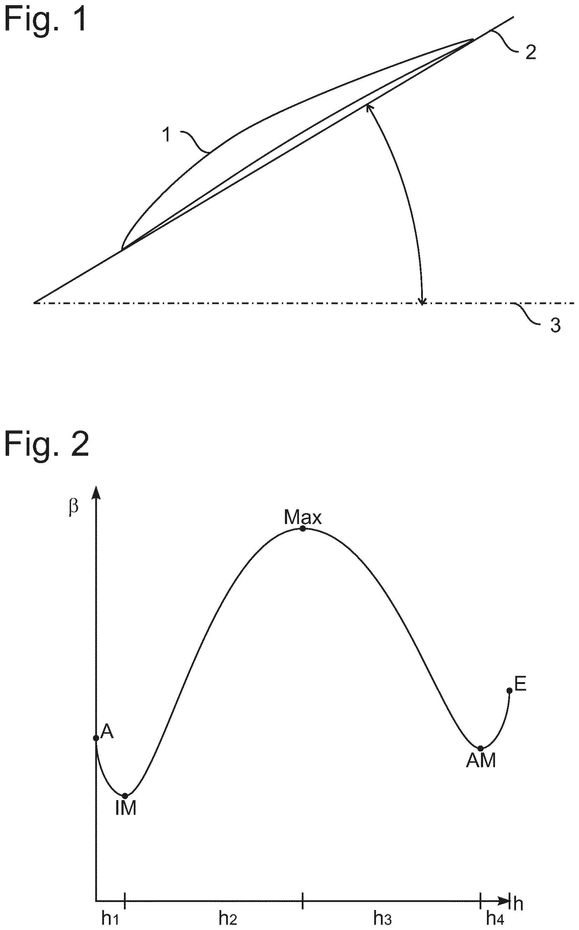

Fig. 1 zeigt einen Profilschnitt 1 einer Leitschaufel eines Leitgitters eines Verdichters einer Gasturbine nach einer Ausführung der vorliegenden Erfindung mit einer Profilsehne 2, die mit einer Rotationsachse 3 des Verdichters einen Staffelungswinkel β einschließt.

Fig. 2 zeigt den Verlauf des Staffelungswinkels β der Leitschaufel der Fig. 1 über einer Kanalhöhe h.

Der Staffelungswinkel β nimmt über der Kanalhöhe h radial von innen nach außen (von links nach rechts in Fig. 2) in einem ersten, radial innersten Abschnitt h₁ von einem Anfangswert A auf ein inneres lokales Minimum IM streng monoton ab, in einem daran anschließenden zweiten Abschnitt h₂ streng monoton auf ein lokales Maximum Max zu, in einem daran anschließenden dritten Abschnitt h₃ streng monoton auf ein äußeres lokales Minimum AM ab und in einem daran anschließenden vierten, radial äußersten Abschnitt h₄ streng monoton von dem äußeren lokalen Minimum auf einen Endwert E zu.

Das lokale Maximum Max ist um 3,8° größer als der Anfangswert A und um 5,7° größer der Endwert E. Der Anfangswert A ist um 1,9° größer als der Endwert E. Der Anfangswert A ist um 1,4° größer als das innere lokale Minimum IM, der Endwert E um 1,4° größer als das äußere lokale Minimum AM. Das lokale Maximum Max ist um 5,2° größer als das innere lokale Minimum IM und um 7,1° größer als das äußere lokale Minimum AM. Die Höhe des ersten und vierten Abschnitts beträgt jeweils 7% der Gesamtkanalhöhe, die des zweiten und dritten Abschnitts beträgt jeweils 43%, so dass das lokale Maximum bei 50% der Gesamtkanalhöhe angeordnet ist.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Profilschnitt
- 2: Profilsehne
- 3: Rotationsachse
- β: Staffelungswinkel
- h: Kanalhöhe
- h_{1/2/3/4}: erster/zweiter/dritter/vierter Abschnitt
- A: Anfangswert
- E: Endwert
- IM: inneres lokales Minimum
- AM: äußeres lokales Minimum
- Max: lokales Maximum

## Patentansprüche

1. Leitgitter für einen Verdichter einer Gasturbine, insbesondere eines Flugtriebwerks, mit einer Mehrzahl von Leitschaufeln, deren Profilschnitte (1) mit einer Rotationsachse (3) des Verdichters einen Staffelungswinkel (β) einschließen, der über einer Kanalhöhe (h) des Leitgitters variiert, wobei
der Staffelungswinkel über der Kanalhöhe zwischen einem radial innersten Anfangswert (A) und einem radial äußersten Endwert (E) in einem an einen ersten, radial innersten Abschnitt (h₁) anschließenden zweiten Abschnitt (h₂) auf ein lokales Maximum (Max) zunimmt und in einem an diesen zweiten Abschnitt anschließenden dritten Abschnitt (h₃) auf ein äußeres lokales Minimum (AM) abnimmt, **dadurch gekennzeichnet, dass**
der Staffelungswinkel über der Kanalhöhe von innen nach außen in dem ersten, radial innersten Abschnitt von dem Anfangswert auf ein inneres lokales Minimum (IM) abnimmt und/oder in einem an den dritten Abschnitt anschließenden vierten, radial äußersten Abschnitt (h₄) von dem äußeren lokalen Minimum auf den Endwert zunimmt.

2. Leitgitter nach Anspruch 1, **dadurch gekennzeichnet, dass** der Staffelungswinkel in dem ersten und/oder dritten Abschnitt monoton, insbesondere streng monoton, abnimmt und/oder in dem zweiten und/oder vierten Abschnitt monoton, insbesondere streng monoton, zunimmt.

3. Leitgitter nach einem der vorhergehenden Ansprüche, **dadurch gekennzeichnet, dass** das lokale Maximum größer ist als der Anfangswert und/oder der Endwert, insbesondere um wenigstens 2,5° und/oder höchstens 7°.

4. Leitgitter nach einem der vorhergehenden Ansprüche, **dadurch gekennzeichnet, dass** der Anfangswert kleiner ist als der Endwert, insbesondere um wenigstens 1° und/oder höchstens 5°.

5. Leitgitter nach einem der vorhergehenden Ansprüche, **dadurch gekennzeichnet, dass** der Anfangswert um wenigstens 1° und/oder höchstens 2,5° größer ist als das innere lokale Minimum, und/oder dass der Endwert um wenigstens 1° und/oder höchstens 2,5° größer ist als das äußere lokale Minimum.

6. Leitgitter nach einem der vorhergehenden Ansprüche, **dadurch gekennzeichnet, dass** das lokale Maximum um wenigstens 3,5° und/oder höchstens 9,5° größer ist als das innere und/oder äußere lokale Minimum.

7. Leitgitter nach einem der vorhergehenden Ansprüche, **dadurch gekennzeichnet, dass** die Höhe des ersten und/oder vierten Abschnitts jeweils wenigstens 3% und/oder höchstens 25% der Gesamtkanalhöhe zwischen dem Anfangs- und dem Endwert beträgt.

8. Leitgitter nach einem der vorhergehenden Ansprüche, **dadurch gekennzeichnet, dass** das lokale Maximum zwischen 25% und 75% der Gesamtkanalhöhe zwischen dem Anfangs- und dem Endwert angeordnet ist.

9. Leitgitter nach einem der vorhergehenden Ansprüche, **dadurch gekennzeichnet, dass** die Vorderkante wenigstens einer der Leitschaufeln, insbesondere streng konvex, zu einer Saugseite dieser Leitschaufel hin gekrümmt ist.

10. Verdichter für eine Gasturbine, insbesondere eines Flugtriebwerks, mit wenigstens einem, insbesondere stromabwärtigen, Leitgitter nach einem der vorhergehenden Ansprüche.

11. Gasturbine, insbesondere Flugtriebwerk-Gasturbine, mit einem, insbesondere stromabwärtigen, Verdichter nach dem vorhergehenden Anspruch.

## Claims

1. A guide vane assembly for a compressor of a gas turbine, in particular of an aircraft engine, comprising a plurality of guide vanes, the profile sections (1) of which form, with an axis of rotation (3) of the compressor, a stagger angle (β) which varies over a channel height (h) of the guide vane assembly, wherein
over a channel height (h), between a radially innermost initial value (A) and a radially outermost end value (E), the stagger angle increases to a local maximum (Max) in a second portion (h₂) adjoining a first, radially innermost portion (h₁), and decreases to an outer local minimum (AM) in a third portion (h₃) adjoining this second portion, **characterized in that**
over the channel height from the inside to the outside, the stagger angle decreases from the initial value to an inner local minimum (IM) in the first, radially innermost portion or increases from the outer local minimum to the end value in a fourth, radially outermost portion (h₄) adjoining the third portion.

2. The guide vane assembly according to claim 1, **characterized in that** the stagger angle decreases monotonically, in particular strictly monotonically, in the first and/or third portion or increases monotonically, in particular strictly monotonically, in the second and/or fourth portion.

3. The guide vane assembly according to any one of the preceding claims, **characterized in that** the local maximum is greater than the initial value and/or the end value, in particular by at least 2.5° and/or at most 7°.

4. The guide vane assembly according to any one of the preceding claims, **characterized in that** the initial value is less than 1° and/or at most 5°.

5. The guide vane assembly according to any one of the preceding claims, **characterized in that** the initial value is greater than the inner local minimum by at least 1° and/or at most 2.5°, and/or that the end value is greater than the outer local minimum by at least 1° and/or at most 2.5°.

6. The guide vane assembly according to any one of the preceding claims, **characterized in that** the local maximum is greater than the inner and/or outer local minimum by at least 3.5° and/or at most 9.5°.

7. The guide vane assembly according to any one of the preceding claims, **characterized in that** the height of the first and/or fourth portion is in each case at least 3% and/or at most 25% of the total channel height between the initial value and the end value.

8. The guide vane assembly according to any one of the preceding claims, **characterized in that** the local maximum is positioned between 25% and 75% of the total channel height between the initial value and the end value.

9. The guide vane assembly according to any one of the preceding claims, **characterized in that** the leading edge of at least one of the guide vanes is curved, in particular strictly convexly curved, towards a suction side of this guide vane.

10. A compressor for a gas turbine, in particular of an aircraft engine, comprising at least one guide vane assembly, in particular a downstream guide vane assembly, according to any one of the preceding claims,.

11. A gas turbine, in particular an aircraft engine gas turbine, comprising a compressor, in particular a downstream compressor, according to the preceding claim,.

## Revendications

1. Grille de guidage pour un compresseur d'une turbine à gaz, en particulier d'un moteur d'avion, comportant une pluralité d'aubes directrices, dont les sections profilées (1) englobent, avec un axe de rotation (3) du compresseur, un angle de décalage (β), lequel varie sur une hauteur de canal (h) de la grille de guidage, dans laquelle
l'angle de décalage augmente jusqu'à une valeur maximale locale (Max) sur la hauteur de canal entre une valeur de début (A) la plus radialement interne et une valeur de fin (E) la plus radialement externe dans une deuxième section (h₂) se connectant à une première section (h₁) la plus radialement interne, et diminue jusqu'à une valeur minimale locale (AM) externe au niveau d'une troisième section (h₃) se connectant à cette deuxième section, **caractérisée en ce que**
l'angle de décalage diminue sur la hauteur de canal de l'intérieur vers l'extérieur dans la première section, la plus radialement interne, de la valeur de début jusqu'à une valeur minimale locale (IM) interne et/ou augmente de la valeur minimale locale externe à la valeur de fin dans une quatrième section (h₄) la plus radialement externe se connectant à la troisième section.

2. Grille de guidage selon la revendication 1, **caractérisée en ce que** l'angle de décalage diminue de manière monotone, en particulier de manière très monotone dans la première et/ou dans la troisième section et/ou augmente de manière monotone, en particulier de manière très monotone dans la deuxième et/ou dans la quatrième section.

3. Grille de guidage selon l'une des revendications précédentes, **caractérisée en ce que** la valeur maximale locale est supérieure à la valeur de début et/ou à la valeur de fin, en particulier d'au moins 2,5° et/ou d'au plus 7°.

4. Grille de guidage selon l'une des revendications précédentes, **caractérisée en ce que** la valeur de début est inférieure à la valeur de fin, en particulier d'au moins 1° et/ou d'au plus 5°.

5. Grille de guidage selon l'une des revendications précédentes, **caractérisée en ce que** la valeur de début est supérieure d'au moins 1° et/ou d'au plus 2,5° à la valeur minimale locale interne, et/ou que la valeur de fin est supérieure d'au moins 1° et/ou d'au plus 2,5° à la valeur minimale locale externe.

6. Grille de guidage selon l'une des revendications précédentes, **caractérisée en ce que** la valeur maximale locale est supérieure d'au moins 3,5° et/ou d'au plus 9,5° à la valeur minimale interne et/ou externe.

7. Grille de guidage selon l'une des revendications précédentes, **caractérisée en ce que** la hauteur de la première et/ou de la quatrième section est, pour chacune d'elles, d'au moins 3 % et/ou d'au plus 25 % de la hauteur totale de canal entre la valeur de début et la valeur de fin.

8. Grille de guidage selon l'une des revendications précédentes, **caractérisée en ce que** la valeur maximale locale est disposée entre 25 % et 75 % de la hauteur totale de canal entre la valeur de début et la valeur de fin.

9. Grille de guidage selon l'une des revendications précédentes, **caractérisée en ce que** le côté avant d'au moins l'une des aubes de guidage, en particulier très convexe, est incurvé par rapport à un côté d'aspiration de cette aube de guidage.

10. Compresseur pour une turbine à gaz, en particulier d'un moteur d'avion, comportant au moins une grille de guidage, en particulier située en aval, selon l'une des revendications précédentes.

11. Turbine à gaz, en particulier turbine à gaz de moteur d'avion, comportant un compresseur, en particulier situé en aval, selon la revendication précédente.
